# EUROPEAN PATENT SPECIFICATION

(11) **EP 1 597 208 B1**
(45) Date of publication and mention of the grant of the patent: **27.09.2006**
(21) Application number: 04712065.4
(22) Date of filing: 18.02.2004
(51) Int. Cl.: C03B 23/025, C03B 35/18

(54) **METHOD AND APPARATUS FOR BENDING AND TEMPERING OR HEAT-STRENGTHENING A GLASS PANEL**
VERFAHREN UND VORRICHTUNG ZUM BIEGEN UND VORSPANNEN ODER HÄRTEN EINER GLASSCHEIBE
PROCEDE ET APPAREIL POUR PLIER ET TREMPER OU TREMPER THERMIQUEMENT UN PANNEAU DE VERRE

(30) Priority: 21.02.2003 FI 20035022
(43) Date of publication of application: 23.11.2005
(73) Proprietor: Tamglass Ltd. Oy, 33730 Tampere (FI)
(72) Inventor: HARJUNEN, Pete, FI-37120 Nokia (FI); REUNAMÄKI, Pauli, DECEASED (FI)
(74) Representative: LEITZINGER OY
(86) International application number: PCT/FI2004/050017
(87) International publication number: WO 2004/074194

(56) References cited:
- EP-A2- 0 123 119
- FI-B- 76 313
- US-A- 3 881 906
- US-A- 4 226 608
- US-A- 4 556 406
- US-A- 4 557 745
- US-A- 4 586 946
- US-A- 4 820 327
- US-B1- 6 363 753

## Description

The invention relates to a method for bending and tempering or heat-strengthening a glass panel, said method comprising:
- heating a glass panel for bending and tempering or heat-strengthening
- conveying the glass panel on top of horizontal conveyor rolls, said conveyor rolls constituting a bender
- using the conveyor rolls of a bender to provide a bearing support for the substantially flat glass panel prior to bending
- curving the heated glass panel in a main bending direction parallel to the advancing direction and in a sagging direction transversely to the advancing direction
- subjecting the curved glass panel to a tempering or heat-strengthening cooling process.

The invention relates also to an apparatus for bending and tempering or heat-strengthening a glass panel, said apparatus comprising:
- a heating furnace for heating glass panels to a bending temperature
- a bending station for bending glass panels
- horizontal conveyor rolls for conveying glass panels through the bending station
- means for curving a roll conveyor constituted by the conveyor rolls within the bending station in the advancing direction or main bending direction of a glass panel,
- means for bending glass panels presently in the bending station in a sagging direction transversely to the advancing direction, and
- means for cooling a bent glass panel for tempering or heat-strengthening.

In the main bending direction, the glass panel has currently a typical radius of curvature of 900-3000 mm. In the sagging direction, the glass panel has currently a typical radius of curvature of 20000-40000 mm.

In prior known solutions, a glass panel is curved in the main bending direction by curving a row of rolls constituted by conveyor rolls. The Applicant's patent EP-261611 discloses one mechanism for curving a row of rolls in a bending-tempering station. Curving in the main bending direction can also be performed with an assembly described in the Applicant's published international application WO 02/074705.

In the process of bending a glass panel in two directions, it is prior known to curve the glass panel in a sagging direction by means of the following solutions:
- twin rolls are used, one being concave and the other convex (patent publications US-4,820,327 and US-4,139,359)
- rolls are bent at a plurality of support points and/or by deflecting in the middle (patent publications US-6,363,753, US-5,094,679 and US-4,773,925)
- a roll body is bent at the ends or the arc of a curved roll body is turned and the roll body is topped by a rotating "sleeve" (patent publications US-4,586,946, US-4,966,618, US-4,557,745, US-4,575,389 and EP-909742 B1)
- Patent publication US-4,226,608 discloses yet another solution for the bending of rolls by axial pressure applied to the ends.

A common feature in these prior known solutions is that the curvature or curving of a roll is permanent during production and only adjustable when no glass production is underway. The main reason for this is that, in these prior art solutions, changing the radius of curvature or bending radius of a roll is a tedious and inconvenient process or cannot be controlled to a sufficient precision during a dynamic bending process. The cited publications US-4,557,745 and EP-909742 B1 propose elimination of this drawback by turning curved rolls for bringing the arc gradually from horizontal plane to vertical plane and for thereby gradually increasing transverse curvature. This type of roll structure is awkward because the roll must be topped by a rotating sleeve. Another drawback is that the advancing direction keeps changing and is indefinite over the length of a roll, because the circumference of a sleeve surrounding the roll is rotating in a plane which is substantially perpendicular to the roll.

It is an object of the invention to provide a method and apparatus, whereby a glass panel brought into a bending station in a flat condition can be curved in both curving directions, such that the radii of curvature of both curving directions gradually decrease.

This object is achieved by the method according to claim 1 and the apparatus according to claim 8. The dependent claims disclose preferred embodiments for the invention. The inventive method and apparatus involve special features, such as:
1. The rolls of a bending means are in a flat condition upon the arrival of a glass element in a bending station.
2. When the glass element is substantially completely inside the bending station, the rolls are bent simultaneously such that the flexural moment and bending radius applied to the rolls are more or less constant over the entire length of the rolls. The own weight of a roll, the weight of a glass element, and the bending forces are the only factors that cause a slight deviation in an otherwise absolutely consistent radius.
3. During a bending process, every point of the roll bends at a substantially equal bending rate.
4. The bending means bends the rolls at a desired bending rate always precisely to a desired radius of curvature.

Two exemplary embodiments of the invention will now be described in more detail with reference to the accompanying drawings, in which
- Fig. 1: shows a bending means according to a first embodiment of the invention prior to initiating a bending process as a flat glass panel has arrived on top of rectilinear rolls;
- Fig. 2: shows the bending means of fig. 1 at the end of a bending process with a glass element in a bent condition;
- Fig. 3A: shows a section along a line A-A in fig. 1, in a larger scale;
- Fig. 3B: shows a detail indicated by an arrow B in fig. 1, in a larger scale;
- Fig. 4: shows a bending means according to a second embodiment of the invention at the start of a bending process with a flat glass panel on top of rectilinear rolls 4;
- Fig. 5: shows the bending means of fig. 4 at the end of a bending process with a glass element in a bent condition;
- Fig. 6: shows the bending means of fig. 4 after a tempering process as a bent and tempered glass element is ready to transfer out of the bending and tempering station;
- Fig. 7: shows a detail in a section along a line VII-VII in fig. 6, in a larger scale;
- Fig. 8: shows schematically in a side view a bending and tempering station of the invention, which is provided with the bending means of figs. 4-7; and
- Fig. 9: shows schematically the bending and tempering station of fig. 8 at the end of a bending process. Figs. 8 and 9 illustrate just some of the transverse bending devices, such devices being of course associated with every roll 4.

Regarding the invention, its novelty relates to the process of curving a glass panel in a direction transverse to the advancing direction, i.e. in a sagging direction.

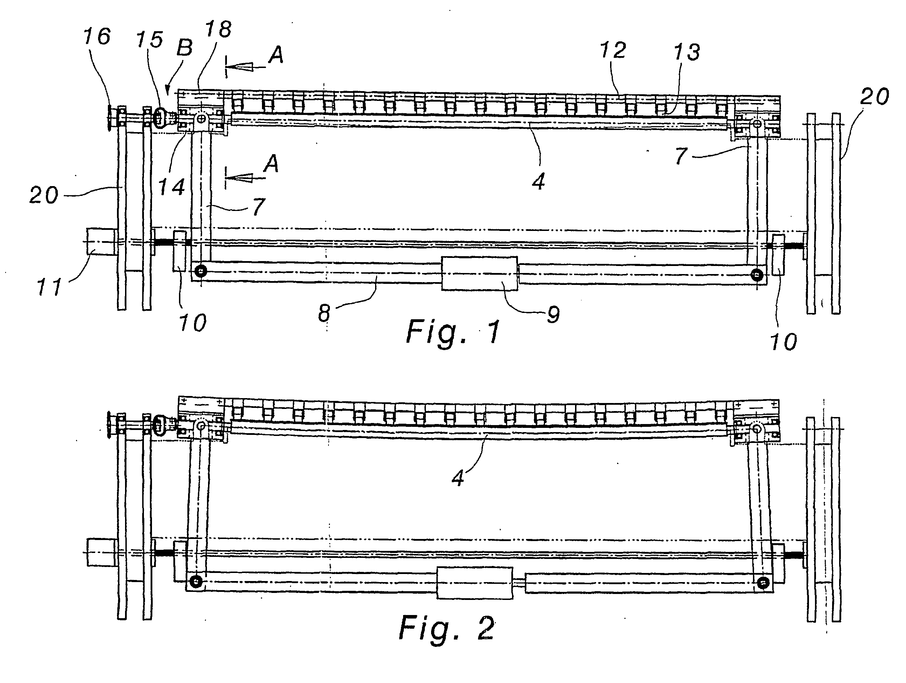

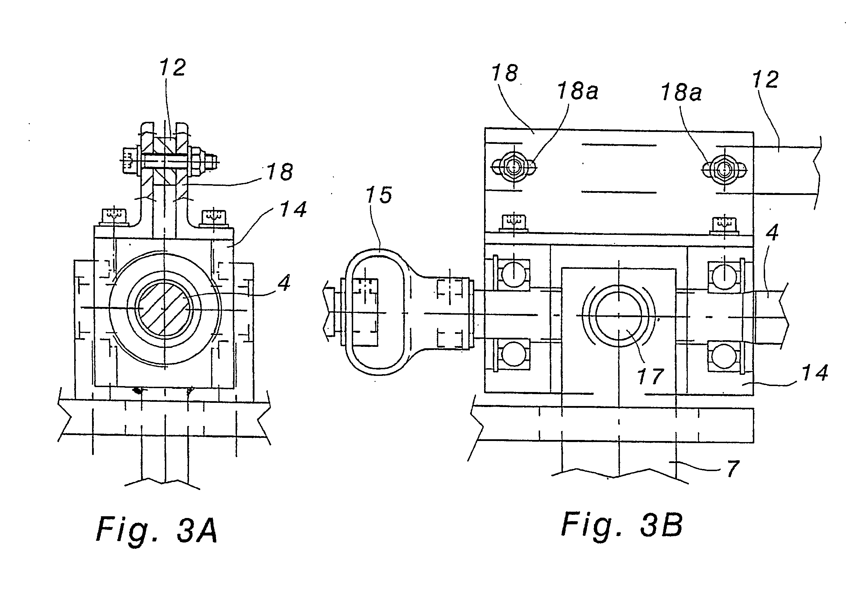

Figs. 1-3 depict an apparatus according to a first embodiment of the invention for curving a glass panel in a direction transverse to the advancing direction, i.e. in a sagging direction. The bending station's conveyor rolls 4 have both ends thereof provided with a lever element 7 bearing-mounted for free rotation. The end of each lever element 7 is provided with a bearing 14, which is rotated by the lever element 7 as it turns. The roll 4 has its end bearing-mounted to the bearing 14 such that, during its rotation, the bearing 14 applies a bending flexural moment to the roll 4. During a glass bending process, the curvature of the roll 4 is changed by bending the roll.

To the other end of the lever elements 7 is bearing-mounted a push rod 8 (which functions as a pull rod for convex bending). The push rod 8 has its length quickly variable by means of an actuator 9. A single actuator 9 can be adapted to bend two adjacent rolls 4. The actuator 9 may comprise e.g. a pneumatic cylinder capable of changing the length of the push rod 8 up to stoppers 10. The stoppers' position is adjustable e.g. by means of a threaded shaft rotated by a motor 11, the stopper 10 being mounted thereon. The actuator 9 may also comprise an electromechanical or hydraulic actuator. If the actuator 9 is a pneumatic cylinder, the curving can also be regulated simply by varying the cylinder's working pressure.

A rotary drive for the roll 4 from a sprocket 16 is transmitted by way of a flexible drive means 15, allowing slight movements for the end of a roll 4 both in axial direction and radial direction. A slight axial movement is necessary for the reason that, in the process of curving the rolls 4, the distance between the ends thereof becomes slightly smaller. Respectively, as the rolls undergo thermal expansion as a result of hot glass elements, the distance between the roll ends becomes slightly longer. The bearing assembly 14 is what is referred to as "floating", which allows slight movements of the axle relative to a bearing house.

In the embodiment of figs. 1-3, the apparatus comprises also rows of press wheels, comprising press wheels 13 which are freely rotating. The press wheels 13 are mounted on a deflectable bar 12, having its ends connected to a fastening lug 18 by way of axial-play allowing attachments 18a, which lug is secured to the bearing element 14 of a roll end. Thus, the roll 4 and the bar 12 bend at the same time to the same degree. Hence, the rows of press wheels 13 are bent consistently with the rolls 4, such that the bending of a row of wheels 13 complies with that of the roll 4, thus maintaining a gap between the wheels' 13 bottom surface and the rolls' 4 top surface at least equal to the thickness of a glass element to be bent/tempered. The row of press wheels 13 can be replaced by another bendable roll, which is rotated synchronically with the lower roll 4.

The bending device of figs. 1-3 is only used in a glass bending process because the row of press wheels 13 is linked to a bending mechanism for the rolls 4. The bent glass element must be transferred for tempering in a separate tempering station downstream of the bending station.

Reference numeral 20 represents bending elements in a lengthwise bending means for bending a row of rolls 4 in a conventional manner in the conveying direction. The rolls 4 have their benders bearing-mounted to these bending elements 20.

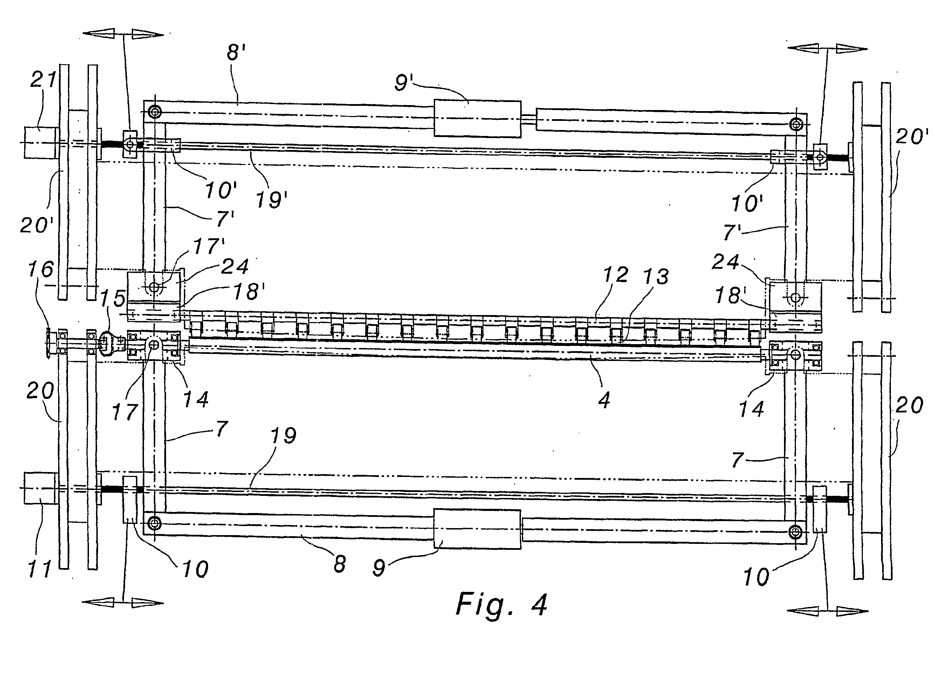

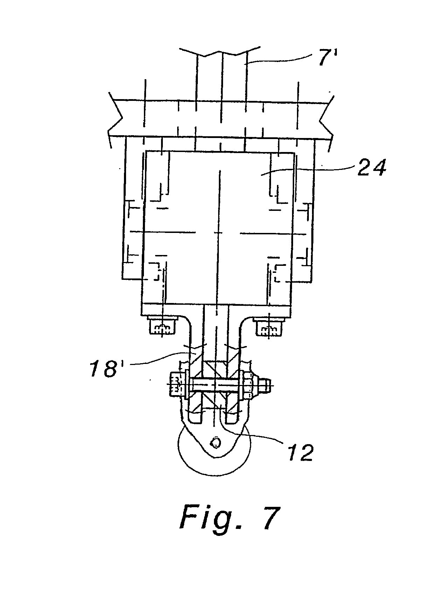

If the bending means is used in an oscillating system, in which bending and tempering processes for a glass element are performed in a single station, the bending mechanisms for the rolls 4 and the upper wheels 3 are separate from each other, yet function on a common principle. This embodiment of the invention is illustrated in figs. 4-9. The bending of the roll 4 proceeds as described in reference to figs. 1-3. However, bending elements for a row (bar 12) constituted by the press wheels 13 are supported and suspended on actuators 20' of the upper lengthwise bending means. The height of these upper lengthwise bending elements 20' relative to the respective lower bending elements 20 can be adjusted in a stepless manner in order to provide between the press wheels 13 and the rolls 4 a suitable gap equal to the thickness of a glass element to be tempered.

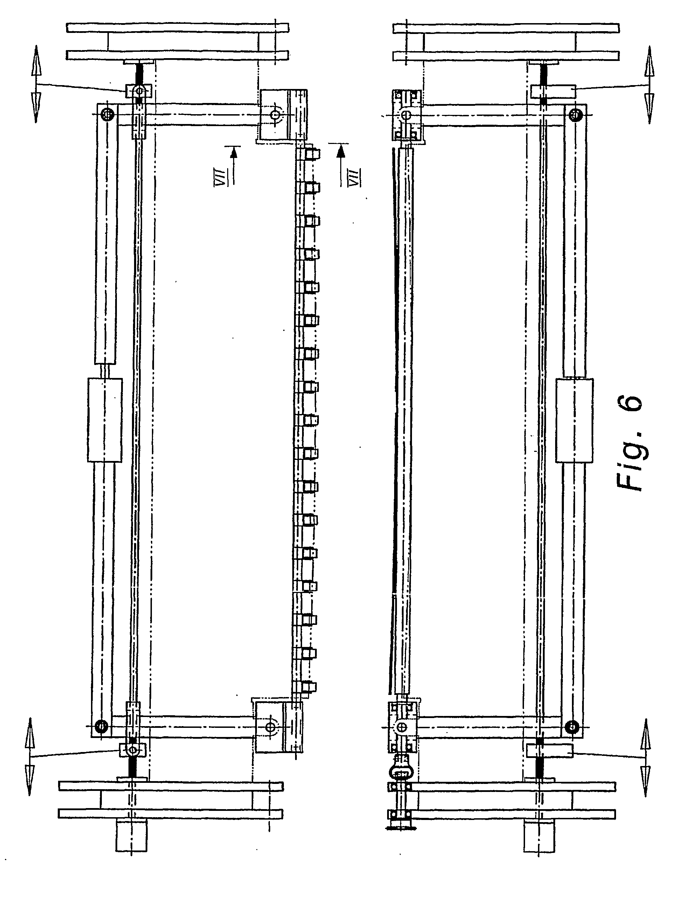

The upper bending elements for lengthwise and crosswise curving can be lifted up after a tempering process for the removal of a glass element (fig. 6).

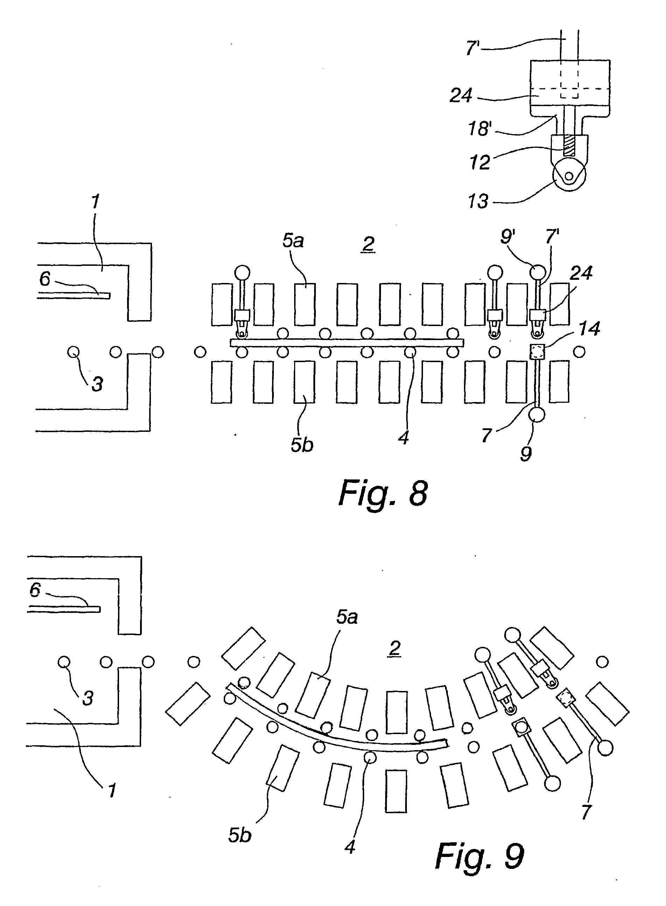

Figs. 4 and 8 represent a situation, wherein a glass element reaches a bender in the tempering station 2, said bender being flat both longitudinally and transversely.

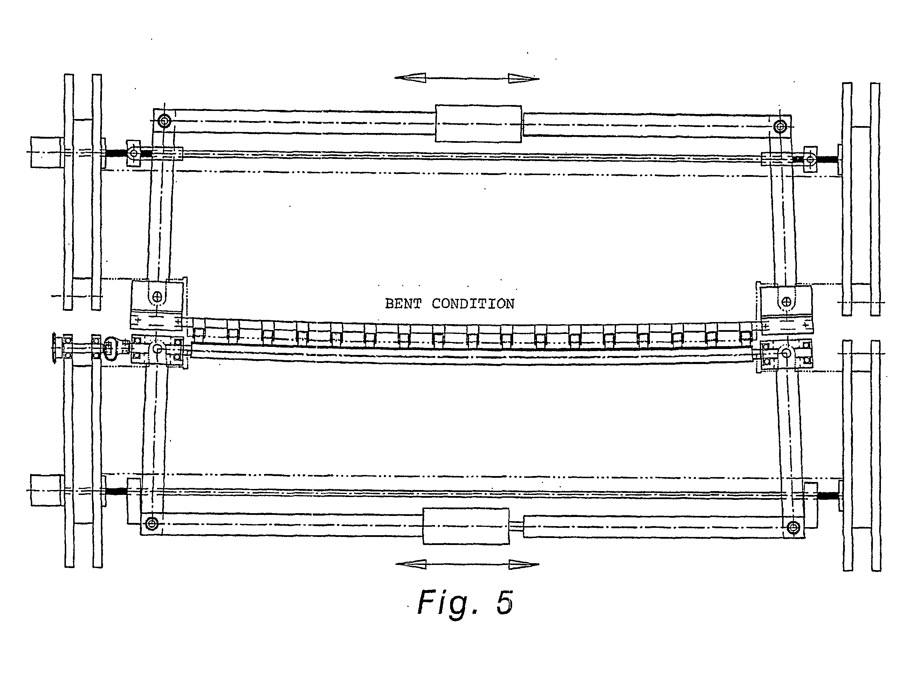

Figs. 5 and 9 represent a situation, wherein a glass element has been bent to form a sag (fig. 5) and in a main bending direction parallel to the advancing direction (fig. 9).

In fig. 4, the same reference numerals are used for the components of bending means for the bar 12 consistent with those of the bending elements for the roll 4, but provided with inverted commas. The bearing element 14 transmitting a torque for the arm 7 has been replaced by a torsion element 24. The levers 7 and 7' have their ends locked inside the elements 14 and 24 by means of a pin 17/17'. The torsion elements 24 are mounted on the fastening lugs 18' for the ends of the deflectable bar 12. A pivotal movement of the arms 7' is limited by internal stoppers 10', whose position is adjusted by means of a motor 21.

Figs. 8 and 9 further visualize upper cooling air boxes 5a and lower cooling air boxes 5b present in the bending and tempering station 2, which are associated with the lengthwise bending elements 20' and 20 along which the rows of boxes 5a and 5b are curving. Thus, also the upper row of boxes 5a is liftable together with the bending elements 20' and sagging elements associated therewith, as shown in fig. 6. In addition, figs. 8 and 9 show schematically a downstream end of the heating furnace 1, the conveyor rolls 3 of a heating furnace, and heating elements 6 constituted e.g. by electric resistances. The heating furnace 1 can be of any conventional type.

## Claims

1. A method for bending and tempering or heat-strengthening a glass panel, said method comprising:
- heating a glass panel for bending and tempering or heat-strengthening
- conveying the glass panel on top of horizontal conveyor rolls (4), said conveyor rolls constituting a bender
- using the conveyor rolls (4) of a bender (2) to provide a bearing support for the substantially flat glass panel prior to bending
- curving the heated glass panel in a main bending direction parallel to the advancing direction and in a sagging direction transversely to the advancing direction
- subjecting the curved glass panel to a tempering or heat-strengthening cooling process,
**characterized in that** the curving in the sagging direction is performed by bending the conveyor rolls (4) during a glass bending process, and that the conveyor rolls (4) are bent by turning lever elements (7), to which the conveyor rolls' ends are bearing-mounted for free rotation and which apply by way of said bearing assemblies (14) a gradually increasing flexural moment to the rotating rolls.

2. A method as set forth in claim 1, **characterized in that** the curving of a glass panel in the advancing direction is performed such that every point of the glass panel is curved in this direction at a substantially equal curving rate, and that the curving of a glass panel in the sagging direction is also performed such that every point of the glass panel curves in the sagging direction at a substantially equal curving rate.

3. A method as set forth in claim 1 or 2, **characterized in that** the bending of a glass panel is assisted by freely rotating press wheels (13), which are mounted on a bar (12) deflected in such a way that the bottom surfaces of the wheels (13) mounted thereon form a radius of curvature which substantially matches that of the conveyor rolls (4) curving the glass panel in the sagging direction.

4. A method as set forth in claim 1 or 2, **characterized in that** the bending of a glass panel is assisted by upper press wheels, which are bent and rotated to the same degree as the conveyor rolls (4).

5. A method as set forth in claim 3 or 4, **characterized in that** the overall distance of the discussed press wheels (13) or the upper press wheels from the roll surface is adjusted according to glass thickness.

6. A method as set forth in claim 1, **characterized in that** the curving of a glass panel in both bending directions is started essentially simultaneously.

7. A method as set forth in any claim 1, **characterized in that** the curving rate is arbitrarily and independently adjustable in both curving directions of a glass panel.

8. An apparatus for bending and tempering or heat-strengthening a glass panel, said apparatus comprising:
- a heating furnace (1) for heating glass panels to a bending temperature
- a bending station (2) for bending glass panels
- horizontal conveyor rolls (4) for conveying glass panels through the bending station
- means (20) for curving a roll conveyor constituted by the conveyor rolls within the bending station in the advancing direction or main bending direction of a glass panel,
- means for bending glass panels presently in the bending station in a sagging direction transversely to the advancing direction, and
- means (5a, 5b) for cooling a bent glass panel for tempering or heat-strengthening,
**characterized in that** the means for bending glass panels in the sagging direction comprise lever elements (7), which are bearing-mounted with bearings (14) for free rotation to both ends of the conveyor rolls (4) and which are associated with power units (9) for bending the rolls (4) by the application of a flexural moment provided by turning the lever elements (7) while the conveyor rolls (4) are rotating inside the lever elements' (7) bearings (14).

9. An apparatus as set forth in claim 8, **characterized in that** between the other ends of the lever elements (7) mounted on the opposite ends of the conveyor rolls (4) is a push rod (8), which is provided with an actuator (9) capable of quickly adjusting the length of the push rod (8).

10. An apparatus as set forth in claim 9, **characterized in that** the apparatus is provided with stopper elements (10) for limiting a pivotal movement of the lever elements (7), and that the stopper elements' position is quickly adjustable by means of a motor drive (11).

11. An apparatus as set forth in claim 9, **characterized in that** the push rod (8) functions as a pull rod for convex bending.

12. An apparatus as set forth in any of claims 8-11, **characterized in that** a single actuator (9) is adapted to bend two adjacent rolls (4).

13. An apparatus as set forth in any of claims 8-12, **characterized in that** above the conveyor rolls (4) are rows of press wheels, comprising press wheels (13) which are freely rotating and mounted on a support bar (12) which is deflectable to match a bending of the conveyor rolls (4), such that the deflection complies with that of the conveyor rolls, maintaining a gap between the wheels' (13) bottom surface and the conveyor rolls' (4) top surface equal to the thickness of a glass panel to be bent.

14. An apparatus as set forth in any of claims 8-12, **characterized in that** above the conveyor rolls (4) are press wheels, which are provided with a rotary drive synchronized with the conveyor rolls (4) and which are deflectable to match a bending of the conveyor rolls (4), such that the deflection complies with that of the conveyor rolls, maintaining a gap between the press wheels' bottom surface and the conveyor rolls' top surface equal to the thickness of a glass panel to be bent.

15. An apparatus as set forth in claim 13 or 14, **characterized in that** the deflectable support bar (12) or the upper press wheels are adapted to be deflected with a bending means (7, 8, 9) for the conveyor rolls (4) or with a separate bending means (7', 8', 9'), which is structurally and functionally similar to the conveyor rolls' bending means set forth in any of claims 8-12.

## Patentansprüche

1. Verfahren zum Biegen und Vorspannen oder Wärmehärten einer Glasscheibe, wobei das Verfahren aufweist:
- Erwärmen einer Glasscheibe zum Biegen und Vorspannen oder Wärmehärten,
- Fördern der Glasscheibe auf der Oberseite von horizontalen Fördereinrichtungsrollen (4), wobei die Fördereinrichtungsrollen eine Biegeeinrichtung bilden,
- Verwenden der Fördereinrichtungsrollen (4) einer Biegeeinrichtung (2), um einen Lagerkörper für die im Wesentlichen flache Glasscheibe vor einem Biegen bereitzustellen,
- Krümmen der erwärmten Glasscheibe in einer Hauptbiegerichtung parallel zu der Vorschubrichtung und in einer Durchhängungsrichtung quer zu der Vorschubrichtung,
- Unterwerfen der gekrümmten Glasscheibe einem Vorspannungs- oder Wärmehärtungs-Kühlprozess,
**dadurch gekennzeichnet, dass** die Krümmung in der Durchhängungsrichtung durch Biegen der Fördereinrichtungsrollen (4) während eines Glasbiegeprozesses durchgeführt wird und dass die Fördereinrichtungsrollen (4) durch Drehen von Hebelelementen (7), an denen die Enden der Fördereinrichtungsrollen lagernd für eine freie Drehung befestigt sind, und die, mittels der Lageranordnungen (14), ein sich stufenweise zunehmendes Biegemoment auf die sich drehenden Rollen aufbringen, gebogen werden.

2. Verfahren nach Anspruch 1, **dadurch gekennzeichnet, dass** die Krümmung einer Glasscheibe in der Vorschubrichtung so durchgeführt wird, dass jeder Punkt der Glasscheibe in dieser Richtung unter einer im Wesentlichen gleichen Krümmungsrate gekrümmt wird und dass die Krümmung einer Glasscheibe in der Durchhängungsrichtung auch so durchgeführt wird, dass sich jeder Punkt der Glasscheibe in der Durchhängungsrichtung unter einer im Wesentlichen gleichen Krümmungsrate krümmt.

3. Verfahren nach Anspruch 1 oder 2, **dadurch gekennzeichnet, dass** das Biegen einer Glasscheibe durch sich frei drehende Drückräder (13) unterstützt wird, die an einem Stab (12) befestigt sind, der in einer solchen Art und Weise ausgelenkt wird, dass die Bodenflächen der Räder (13), die daran befestigt sind, einen Krümmungsradius bilden, der im Wesentlichen denjenigen der Fördereinrichtungsrollen (4), die die Glasscheibe in der Durchhängungsrichtung krümmen, anpasst.

4. Verfahren nach Anspruch 1 oder 2, **dadurch gekennzeichnet, dass** das Biegen einer Glasscheibe durch obere Drückräder unterstützt wird, die in demselben Grad wie die Fördereinrichtungsrollen (4) gebogen und gedreht werden.

5. Verfahren nach Anspruch 3 oder 4, **dadurch gekennzeichnet, dass** der Gesamtabstand der angesprochenen Drückräder (13) oder der oberen Drückräder von der Rollenoberfläche entsprechend der Glasdicke eingestellt wird.

6. Verfahren nach Anspruch 1, **dadurch gekennzeichnet, dass** die Krümmung einer Glasscheibe in beiden Biegerichtungen im Wesentlichen gleichzeitig begonnen wird.

7. Verfahren nach Anspruch 1, **dadurch gekennzeichnet, dass** die Krümmungsrate wahlweise und unabhängig in beiden Krümmungsrichtungen einer Glasscheibe einstellbar ist.

8. Vorrichtung zum Biegen und Vorspannen oder Wärmehärten einer Glasscheibe, wobei die Vorrichtung aufweist:
- einen Heizofen (1) zum Erwärmen der Glasscheiben auf eine Biegetemperatur,
- eine Biegestation (2) zum Biegen der Glasscheiben,
- horizontale Fördereinrichtungsrollen (4) zum Befördern der Glasscheiben durch die Biegestation,
- Mittel (20) zum Krümmen einer Rollenfördereinrichtung, die durch die Fördereinrichtungsrollen innerhalb der Biegestation in der Vorschubrichtung oder in der Hauptbiegerichtung einer Glasscheibe gebildet ist,
- Mittel zum Biegen der Glasscheiben, die in der Biegestation vorhanden sind, in einer Durchhängungsrichtung quer zu der Vorschubrichtung, und
- Mittel (5a, 5b) zum Kühlen einer gebogenen Glasscheibe zum Vorspannen oder Wärmehärten,
**dadurch gekennzeichnet, dass** die Mittel zum Biegen von Glasscheiben in der Durchhängungsrichtung Hebelelemente (7) aufweisen, die lagernd mit Lagern (13) für eine freie Drehung an beiden Enden der Fördereinrichtungsrollen (4) befestigt sind und die zu Antriebseinheiten (9) zum Biegen der Rollen (4) durch Aufbringen eines Biegemoments, das durch Drehen der Hebelelemente (7) erzielt wird, während sich die Fördereinrichtungsrollen (4) innerhalb der Lager (14) der Hebelelemente (7) drehen, zugeordnet sind.

9. Vorrichtung nach Anspruch 8, **dadurch gekennzeichnet, dass** zwischen den anderen Enden der Hebelelemente (7), befestigt an den gegenüberliegenden Enden der Fördereinrichtungsrollen (4), eine Schubstange (8) vorhanden ist, die mit einem Betätigungsglied (9) versehen ist, das dazu geeignet ist, schnell die Länge der Schubstange (8) einzustellen.

10. Vorrichtung nach Anspruch 9, **dadurch gekennzeichnet, dass** die Vorrichtung mit Anschlagelementen (10) zum Begrenzen einer Schwenkbewegung der Hebelelemente (7) versehen ist und dass die Position der Anschlagelemente schnell mittels eines Motorantriebs (11) einstellbar ist.

11. Vorrichtung nach Anspruch 9, **dadurch gekennzeichnet, dass** die Schubstange (8) als eine Zugstange für ein konvexes Biegen arbeitet.

12. Vorrichtung nach einem der Ansprüche 8-11, **dadurch gekennzeichnet, dass** ein einzelnes Betätigungsglied (9) so angepasst ist, um zwei benachbarte Rollen (4) zu biegen.

13. Vorrichtung nach einem der Ansprüche 8-12, **dadurch gekennzeichnet, dass** die vorstehenden Fördereinrichtungsrollen (4) Reihen aus Drückrädern sind, die Drückräder (13) aufweisen, die sich frei drehen und an einem Tragestab (12) befestigt sind, der so auslenkbar ist, um eine Biegung der Fördereinrichtungsrollen (4) so anzupassen, dass die Auslenkung mit derjenigen der Fördereinrichtungsrollen, unter Beibehalten eines Zwischenraums zwischen der Bodenfläche der Räder (13) und der Oberfläche der Fördereinrichtungsrollen (4) gleich zu der Dicke einer Glasscheibe, die gebogen werden soll, übereinstimmt.

14. Vorrichtung nach einem der Ansprüche 8-12, **dadurch gekennzeichnet, dass** die vorstehenden Fördereinrichtungsrollen (4) Drückräder sind, die mit einem Drehantrieb, synchronisiert zu den Fördereinrichtungsrollen (4), versehen sind, und die so auslenkbar sind, um eine Biegung der Fördereinrichtungsrollen (4) so anzupassen, dass die Auslenkung mit derjenigen der Fördereinrichtungsrollen, unter Beibehalten eines Zwischenraums zwischen der Bodenfläche der Drückräder und der Oberfläche der Fördereinrichtungsrollen gleich zu der Dicke einer Glasscheibe, die gebogen werden soll, übereinstimmt.

15. Vorrichtung nach Anspruch 13 oder 14, **dadurch gekennzeichnet, dass** der auslenkbare Tragestab (12) oder die oberen Drückräder so angepasst sind, um mit einer Biegeeinrichtung (7, 8, 9) für die Fördereinrichtungsrollen (4) oder mit einer getrennten Biegeeinrichtung (7', 8', 9'), die strukturell und funktional ähnlich zu der Biegeeinrichtung der Fördereinrichtungsrollen ist, die in irgendeinem der Ansprüche 8-12 angegeben ist, ausgelenkt zu werden.

## Revendications

1. Procédé pour plier et tremper ou renforcer de manière thermique un panneau de verre, ledit procédé comprenant les étapes consistant à :
- chauffer un panneau de verre pour le plier et le tremper ou le renforcer de manière thermique,
- transporter le panneau de verre sur la partie supérieure de rouleaux de transport (4) horizontaux, lesdits rouleaux de transport constituant un dispositif de pliage,
- utiliser les rouleaux de transport (4) d'un dispositif de pliage (2) afin de fournir, avant le pliage, un support d'appui pour le panneau de verre sensiblement plat,
- incurver le panneau de verre chauffé dans une direction principale de pliage parallèle à la direction d'avancement, et dans une direction de relâchement, transversalement à la direction d'avancement,
- soumettre le panneau de verre incurvé à un procédé de refroidissement de trempage ou de renforcement thermique,
**caractérisé en ce que** l'incurvation dans la direction de relâchement est réalisée en pliant les rouleaux de transport (4) pendant un processus de pliage de verre, et **en ce que** les rouleaux de pliage (4) sont pliés en faisant tourner des éléments de levier (7) sur lesquels les extrémités des rouleaux de transport sont montées en appui en vue d'une rotation libre, et qui appliquent, à l'aide desdits ensembles d'appui (14) un moment de flexion croissant progressivement sur les rouleaux de rotation.

2. Procédé selon la revendication 1, **caractérisé en ce que** l'incurvation d'un panneau de verre dans la direction d'avancement est réalisée de telle sorte que chaque point du panneau de verre soit incurvé dans cette direction à une vitesse d'incurvation sensiblement égale, et **en ce que** l'incurvation d'un panneau de verre dans la direction de relâchement soit réalisée aussi de telle sorte que chaque point du panneau de verre s'incurve dans la direction de relâchement à une vitesse d'incurvation sensiblement égale.

3. Procédé selon la revendication 1 ou 2, **caractérisé en ce que** le pliage d'un panneau de verre est facilité par des roues de compression (13) tournant librement qui sont montées sur une barre (12) déviée de telle manière que les surfaces inférieures des roues (13) montées sur celle-ci forment un rayon de courbure qui concorde sensiblement avec celui des rouleaux de transport (4) incurvant le panneau de verre dans la direction de relâchement.

4. Procédé selon la revendication 1 ou 2, **caractérisé en ce que** le pliage d'un panneau de verre est facilité par des roues de compression supérieures qui sont pliées et mises en rotation d'un même angle que celui des rouleaux de transport (4).

5. Procédé selon la revendication 3 ou 4, **caractérisé en ce que** la distance globale des roues de compression (13) susmentionnées ou des roues de compression supérieures est adaptée par rapport à la surface des rouleaux selon l'épaisseur de verre.

6. Procédé selon la revendication 1, **caractérisé en ce que** les incurvations d'un panneau de verre dans les deux directions de pliage commencent essentiellement simultanément.

7. Procédé selon la revendication 1, **caractérisé en ce que** la vitesse d'incurvation peut être adaptée de manière arbitraire et indépendante dans les deux directions d'incurvation d'un panneau de verre.

8. Appareil pour plier et tremper ou renforcer de manière thermique un panneau de verre, ledit appareil comprenant :
- un four pour traitement thermique (1) permettant de chauffer des panneaux de verre jusqu'à une température de pliage,
- un poste de pliage (2) permettant de plier des panneaux de verre,
- des rouleaux de transport (4) horizontaux permettant de transporter des panneaux de verre à travers le poste de pliage,
- des moyens (20) permettant d'incurver un dispositif de transport à rouleaux constitués des rouleaux de transport à l'intérieur du poste de pliage, dans la direction d'avancement ou dans la direction principale de pliage d'un panneau de verre,
- des moyens permettant de plier des panneaux de verre présentement dans le poste de pliage dans une direction de relâchement, transversalement à la direction d'avancement, et
- des moyens (5a, 5b) permettant de refroidir un panneau de verre plié en vue d'un trempage ou d'un renforcement thermique,
**caractérisé en ce que** les moyens permettant de plier des panneaux de verre dans la direction de relâchement comprennent des éléments de levier (7) qui sont montés en appui avec des paliers (14) en vue d'une rotation libre par rapport aux deux extrémités des rouleaux de transport (4), et qui sont associés à des unités de puissance (9) permettant de plier les rouleaux (4) en appliquant un moment de flexion fourni en faisant tourner les éléments de levier (7) alors que les rouleaux de transport (4) tournent à l'intérieur des paliers (14) des éléments de levier (7).

9. Appareil selon la revendication 8, **caractérisé en ce qu'**il existe, entre les autres extrémités des éléments de levier (7) montés sur les extrémités opposées des rouleaux de transport (4), une tige de poussée (8) qui est prévue avec un dispositif d'actionnement (9) capable d'adapter rapidement la longueur de la tige de poussée (8).

10. Appareil selon la revendication 9, **caractérisé en ce que** l'appareil est prévu avec des éléments d'arrêt (10) permettant de limiter un mouvement de pivotement des éléments de levier (7), et **en ce que** la position des éléments d'arrêt peut être adaptée rapidement à l'aide d'un dispositif d'entraînement à moteur (11).

11. Appareil selon la revendication 9, **caractérisé en ce que** la tige de poussée (8) fonctionne comme une tige de traction pour pliage convexe.

12. Appareil selon l'une quelconque des revendications 8 à 11, **caractérisé en ce qu'**un seul dispositif d'actionnement (9) est adapté pour plier deux rouleaux adjacents (4).

13. Appareil selon l'une quelconque des revendications 8 à 12, **caractérisé en ce qu'**il existe, au-dessus des rouleaux de transport (4), des rangées de roues de compression, comprenant des roues de compression (13) qui sont mises librement en rotation et montées sur une barre de support (12) qui peut être déviée afin de concorder avec un pliage des rouleaux de transport (4), de telle sorte que la déviation se conforme à celle des rouleaux de transport, maintenant un intervalle entre la surface inférieure des roues (13) et la surface supérieure des rouleaux de transport (4) égal à l'épaisseur d'un panneau de verre qui doit être plié.

14. Appareil selon l'une quelconque des revendications 8 à 12, **caractérisé en ce qu'**il existe, au-dessus des rouleaux de transport (4), des roues de compression qui sont prévues avec un dispositif d'entraînement rotatif synchronisé aux rouleaux de transport (4), et qui peuvent être déviées afin de concorder avec un pliage des rouleaux de transport (4), de telle sorte que la déviation se conforme à celle des rouleaux de transport, maintenant un intervalle entre la surface inférieure des roues de compression et la surface supérieure des rouleaux de transport égal à l'épaisseur d'un panneau de verre qui doit être plié.

15. Appareil selon la revendication 13 ou 14, **caractérisé en ce** la barre de support (12) pouvant être déviée ou les roues de compression supérieures est ou sont apte(s) à être déviée(s) avec des moyens de pliage (7, 8, 9) pour les rouleaux de transport (4), ou avec des moyens de pliage (7', 8', 9') séparés qui sont semblables du point de vue structurel et fonctionnel aux moyens de pliage des rouleaux de transport définis dans l'une quelconque des revendications 8 à 12.
